# NEW EUROPEAN PATENT SPECIFICATION

(11) **EP 0 509 673 B2**
(45) Date of publication and mention of the opposition decision: **05.11.2003**
(45) Mention of the grant of the patent: 12.03.1997
(21) Application number: 92302837.7
(22) Date of filing: 31.03.1992
(51) Int. Cl.: C09K 5/04

(54) **Refrigerant compositions**
Kühlzusammensetzungen
Compositions réfrigérantes

(30) Priority: 18.04.1991 GB 9108527
(43) Date of publication of application: 21.10.1992
(73) Proprietor: Ineos Fluor Holdings Limited, Southampton, Hampshire SO14 3BP (GB)
(72) Inventor: Lindley, Andrew Arthur, Frodsham, Cheshire WA6 6DN (GB); Morrison, James David, Moulton, Northwich, Cheshire CW9 8QE (GB); Powell, Richard Llewellyn, Bunbury, Tarporley, Cheshire (GB); Murphy, Frederick Thomas, Frodsham, Cheshire (GB); Corr, Stuart, Runcorn, Cheshire WA7 5BE (GB)
(74) Representative: Dee, Ian Mark

(56) References cited:
- EP-A- 402 009
- EP-A- 0 430 169
- EP-A- 0 430 169
- EP-A- 0 451 692
- WO-A-92/01762
- WO-A-92/11339
- WORLD PATENTS INDEX LATEST Derwent Publications Ltd., London, GB; AN 91-262358 & JP-A-3 170 588 (MATSUSHITA) 24 July 1991
- WORLD PATENTS INDEX LATEST Derwent Publications Ltd., London, GB; AN 89-035371 & JP-A-63 308 084 (ASAHI GLASS) 15 December 1988

## Description

This invention relates to refrigerant compositions for cooling and heating applications and to the use of such refrigerant compositions in heat transfer devices, in particular refrigeration systems. The invention relates, in particular, to refrigerant compositions containing low temperature refrigerants, by which is meant refrigerants intended to achieve and maintain temperatures of the order of -30°C and below, for example -50°C and even -65°C.

Mechanical refrigeration systems (and related heat transfer devices such as heat pumps and air-conditioning systems) are well known. In such systems. a refrigerant liquid evaporates at low pressure taking heat from the surrounding zone. The resulting vapour is then compressed and passed to a condenser where it condenses and gives off heat to a second zone, the condensate being returned through an expansion valve to the evaporator, so completing the cycle. Mechanical energy required for compressing the vapour and pumping the liquid is provided by, for example, an electric motor or an internal combustion engine.

In addition to having a suitable boiling point and a high latent heat of vaporisation, the properties preferred in a refrigerant include low toxicity, non-flammability, non-corrosivity, high stability and freedom from objectionable odour. Other desirable properties, particularly of low temperature refrigerants and refrigeration systems using them, are ready compressibility at pressures below 20 bars, low discharge temperature on compression, high refrigeration capacity, high efficiency (high coefficient of performance) and an evaporator pressure in excess of 1 bar.

Dichlorodifluoromethane (Refrigerant R-12) possesses a suitable combination of properties and has for many years been the most widely used refrigerant.

Dichlorodifluoromethane is, however, unsuitable for low temperature refrigeration applications, and chlorodifluoromethane (Refrigerant R-22), or the azeotrope thereof with chloropentafluoroethane (the azeotrope being Refrigerant R502), are usually used in such applications.

In recent years, however, there has been increasing international concern that fully and partially halogenated chlorofluorocarbons, such as dichlorodifluoromethane and chlorodifluoromethane, may be damaging the earth's protective ozone layer, and there is general agreement that their manufacture and use should be severely restricted and eventually phased out completely.

Whilst heat transfer devices of the type to which the present invention relates are essentially closed systems, loss of refrigerant to the atmosphere can occur due to leakage during operation of the equipment or during maintenance procedures. It is important, therefore, to replace fully and partially halogenated chlorofluorocarbon refrigerants by materials having zero ozone depletion potentials.

In addition to the possibility of ozone depletion, it has been suggested that significant concentrations of halocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals.

According to the present invention there is provided a refrigerant composition comprising:
(I) a refrigerant comprising a ternary mixture of:
   (a) 1,1,1,2-tetrafluoroethane
   (b) difluoromethane (HFC-32) and
   (c) pentafluoroethane (HFC-125); and
(II) an ester lubricant, the refrigirant (I) containing from 5 to 95 weight % of the 1,1,1,2-tetrafluoroethane and from 95 to 5 weight % of the other compound

The refrigerant composition of the invention may comprise one or more additives of the type which are conventionally used in refrigerant compositions. The refrigerant compositions of the invention are particularly suitable for use in low temperature refrigeration systems.

The mixture may be an azeotrope but normally be zeotropic.

The refrigerant may comprise other suitable refrigerant compounds, for example other hydrofluoroalkanes and/or fluorinated ethers. Generally, however, the refrigerant will only contain the hydrofluorocarbons specified above.

The amounts of the various components in the refrigerant may vary within wide limits, and may be selected so as to provide a composition meeting the design requirements of any particular refrigeration system. Thus, for example, varying the relative proportions of the components of a particular mixture in a particular refrigeration system affects such parameters as boiling point of the mixture, condenser pressure, evaporator pressure, discharge temperature, system efficiency (coefficient of performance, by which is meant the ratio of cooling duty achieved to mechanical power supplied to the compressor) and refrigeration capacity (compressor swept volume per unit of cooling duty). In general, increasing the proportion of difluoromethane in a composition lowers the temperature achieved and maintained by the refrigeration system, whilst increasing the proportion of 1,1,1,2-tetrafluoroethane reduces the discharge temperature.

The Tables below show the parameters of a number of refrigerants according to the invention, and compares these with the parameters of the presently used refrigerants R-22 and R-502. All the refrigerants examined were ternary mixtures of difluoromethane (HFC-32), 1,1,1,2-tetrafluoroethane (HFC-134a) and pentafluoroethane (HFC-125). The percentage by weight of each of the components in the refrigerant are given in the top row of each Table. For example, 30/50/20 signifies a refrigerant containing 30 % by weight HFC-32, 50 % by weight HFC-134a and 20 % by weight HFC-125. In the Tables, the glide in the evaporator represents the temperature range over which the refrigerant boils in the evaporator.

The Tables show that refrigerants according to the invention can exhibit parameters similar to those of R-22 and R-502 which they could replace. It will be appreciated that for any particular refrigeration application and system, a refrigerant according to the invention can be designed to achieve the performance criteria of condenser pressure not greater than 20 bars, evaporator pressure greater than 1 bar and compressor discharge temperature below the maximum operating temperature of any lubricant contained in a refrigerant composition in which the refrigerant of the invention is incorporated.

The present invention is particularly concerned with the provision of replacement refrigerants for Refrigerants R-22 and R-502, especially the latter, which are at present widely used in commercial heat transfer devices such as refrigeration systems.

The refrigerant for replacing Refrigerant R-22 is a mixture as defined in claim 1.

An especially preferred refrigerant for replacing Refrigerant R-22 is a ternary mixture consisting essentially of:
(a) 55 to 65 % by weight of 1,1,1,2-tetrafluoroethane (HFC-134a);
(b) 25 to 35 % by weight of difluoromethane (HFC-32); and
(c) 5 to 15 % by weight of pentafluoroethane (HFC-125).

The refrigerant for replacing Refrigerant R-502 is a mixture as defined in claim 1.

A suitable replacement for Refrigerant R-502 may be a mixture comprising a 1:1:1 molar ratio of the above components.

One particularly preferred refrigerant for replacing Refrigerant R-502 is a ternary mixture consisting essentially of:
(a) 25 to 55% by weight, preferably 26 to 55 % by weight of 1,1,1,2-tetrafluoroethane (HFC-134a);
(b) 25 to 55% by weight, preferably 26 to 55 % by weight of difluoromethane (HFC-32); and
(c) 5 to 45 % by weight of pentafluoroethane (HFC-125).

Such a refrigerant can provide a good compromise between the various performance criteria which are desirable for a refrigerant which is intended to replace Refrigerant R-502. Advantageously, however, such a refrigerant can provide a higher refrigeration capacity, i.e a higher cooling duty per unit swept volume, than Refrigerant R-502. Such a refrigerant can also provide a better energy efficiency than Refrigerant R-502 as indicated by a higher value for the coefficient of performance. These effects are illustrated in Tables 2 and 3 by refrigerants 5 to 8.

Another particularly preferred refrigerant for replacing Refrigerant R-502 is a ternary mixture consisting essentially of:
(a) 5 to 25 % by weight, preferably 5 to 24 % by weight of 1,1,1,2-tetrafluoroethane (HFC-134a);
(b) 25 to 75 % by weight, preferably 26 to 75 % by weight of difluoromethane (HFC-32); and
(c) 15 to 65 % by weight of pentafluoroethane (HFC-125).

Such a refrigerant can provide a considerably higher refrigeration capacity, i.e a considerably higher cooling duty per unit swept volume, than Refrigerant R-502. This effect is illustrated in Tables 3, 4 and 5 by refrigerants 9 to 12, 13 and 15.

An especially preferred refrigerant for replacing Refrigerant R-502 is a ternary mixture consisting essentially of:
(a) 5 to 45 % by weight of 1,1,1,2-tetrafluoroethane (HFC-134a);
(b) 15 to 25 % by weight, preferably 15 to 24 % by weight of difluoromethane (HFC-32); and
(c) 35 to 75 % by weight of pentafluoroethane (HFC-125).

Such a refrigerant can provide a good balance between the various performance criteria which are desirable for a refrigerant which is intended to replace Refrigerant R-502. In other words, the performance characteristics of Refrigerant R-502 can be matched reasonably closely by a refrigerant having the composition specified above. This effect is illustrated in Tables 1 and 2 by refrigerants 2 to 4.

All the percentages by weight quoted above are based on the total weight of the refrigerant mixture.

The refrigerant and the compositions containing them may be prepared by a simple mixing process.

As stated above the refrigerant will be formulated into a refrigerant composition together with a lubricant. Polyalkylene glycols and especially esters are the lubricants used in the refrigerant compositions of the invention. By selecting a lubricant with a high thermal stability, it is possible to operate with higher compressor discharge temperature than is currently possible using conventional hydrocarbon lubricants and this can improve the thermodynamic efficiency of the refrigeration system.

The refrigerants are useful in all types of compression cycle heat transfer devices. Thus, they may be used to provide cooling by a method involving condensing the refrigerant and thereafter evaporating it in a heat exchange relationship with a body to be cooled. They may also be used to provide heating by a method involving condensing the refrigerant in a heat exchange relationship with a body to be heated and thereafter evaporating it. The refrigerants are also useful in counter-current heat exchangers to increase the efficiency of such exchangers.

The refrigerants of the invention provide a good compromise between efficiency and low atmospheric lifetime combined with non-flammability and zero ozone depletion. They are especially suitable for applications currently satisfied by Refrigerants R-22 and R-502.

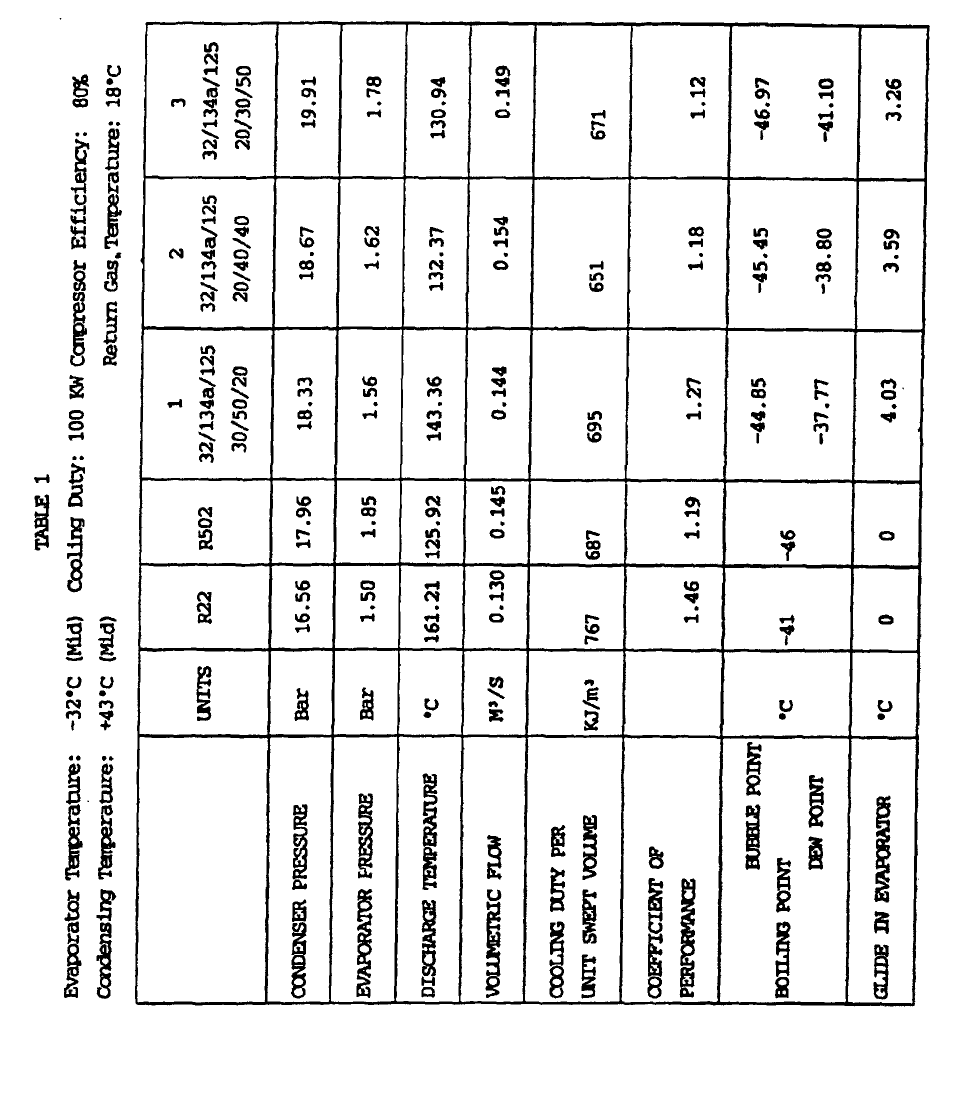

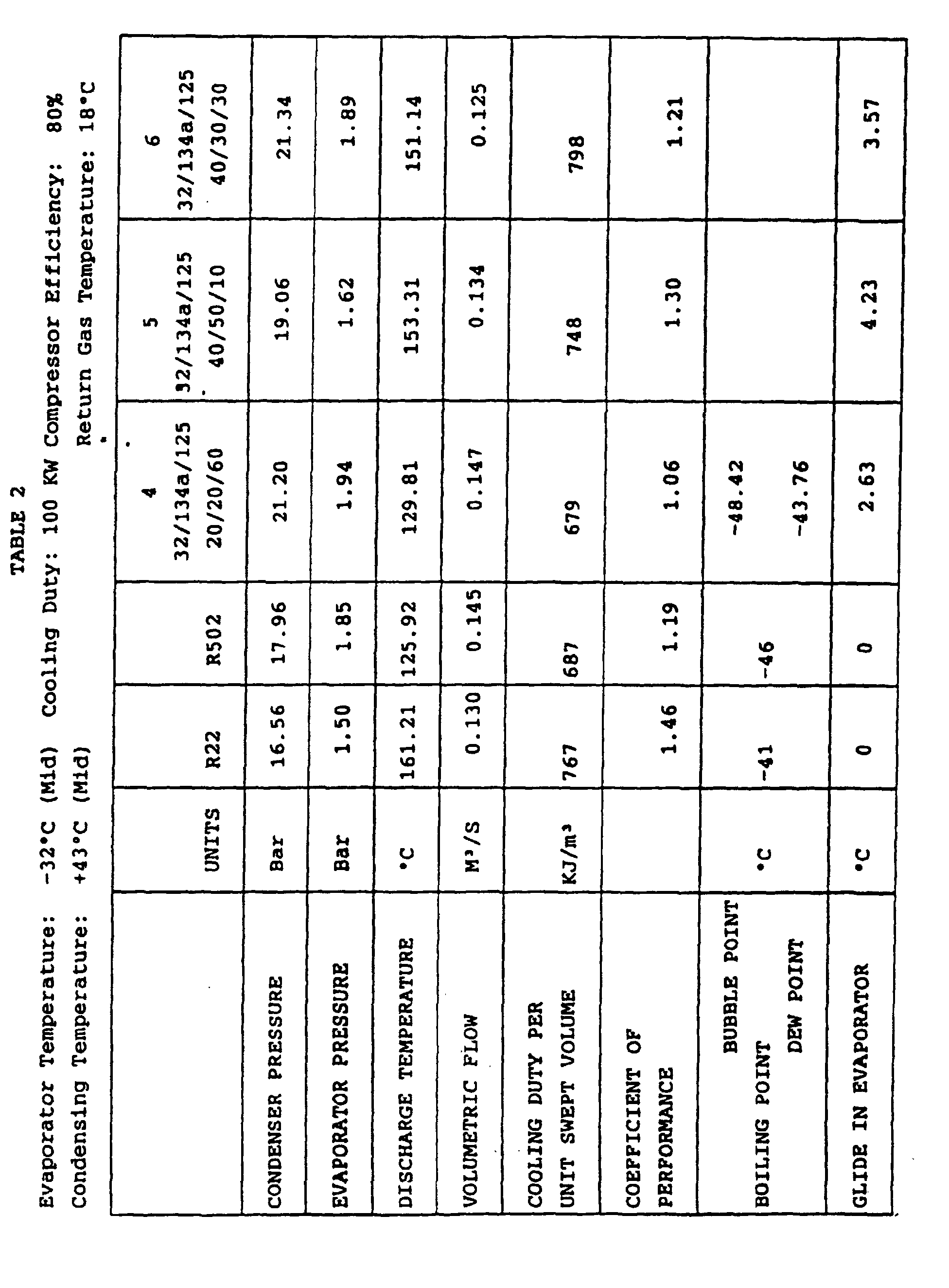

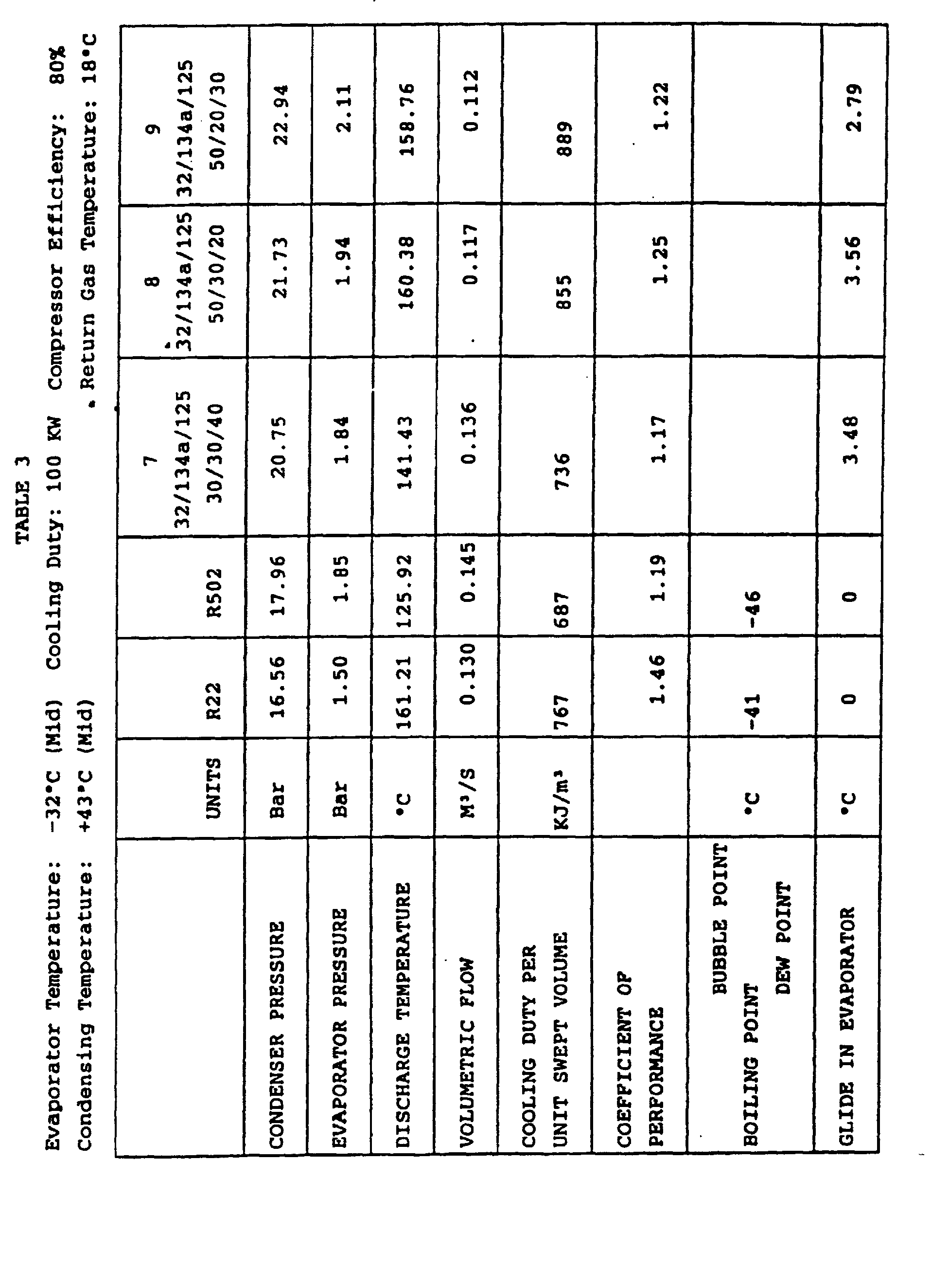

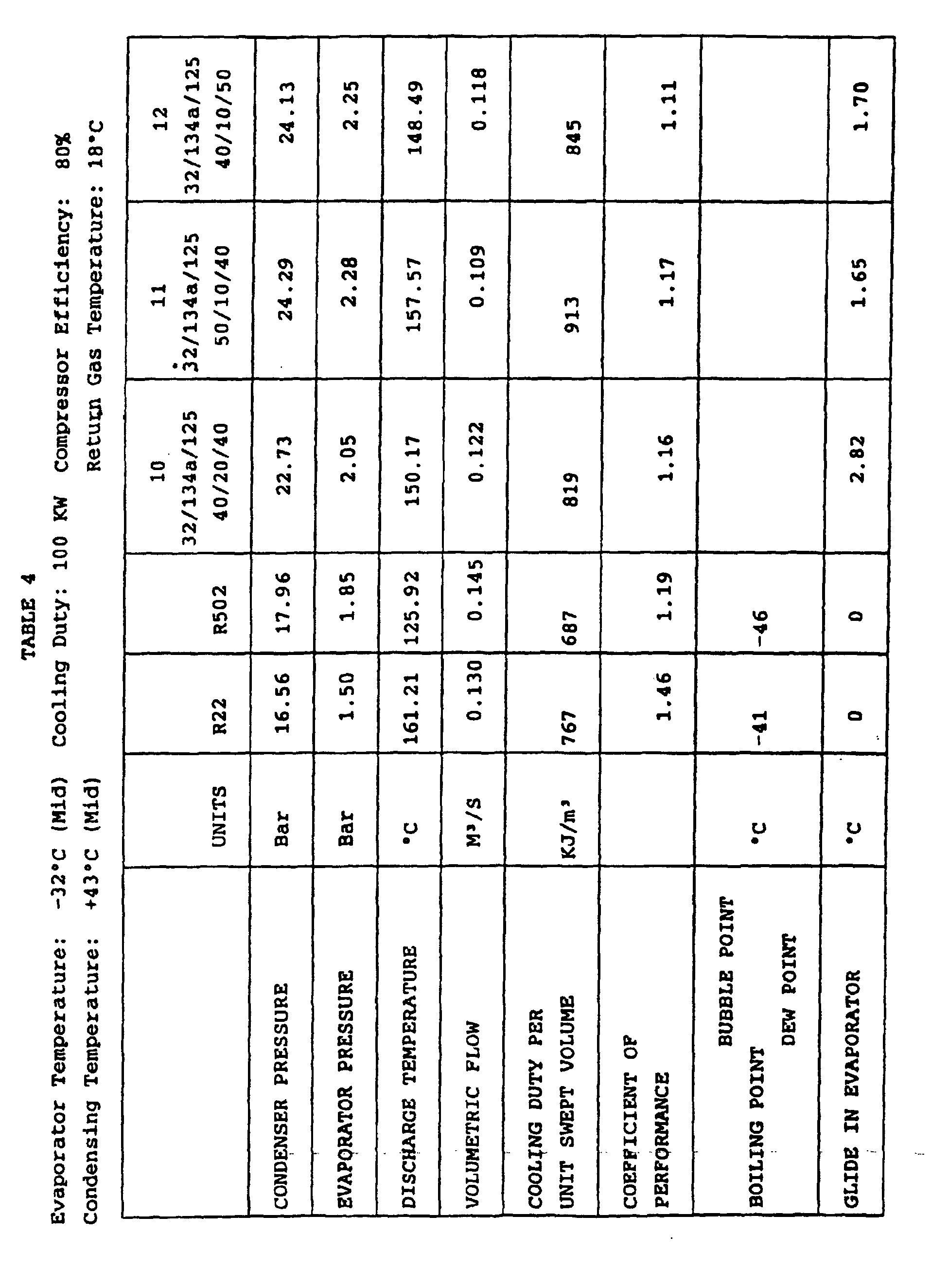

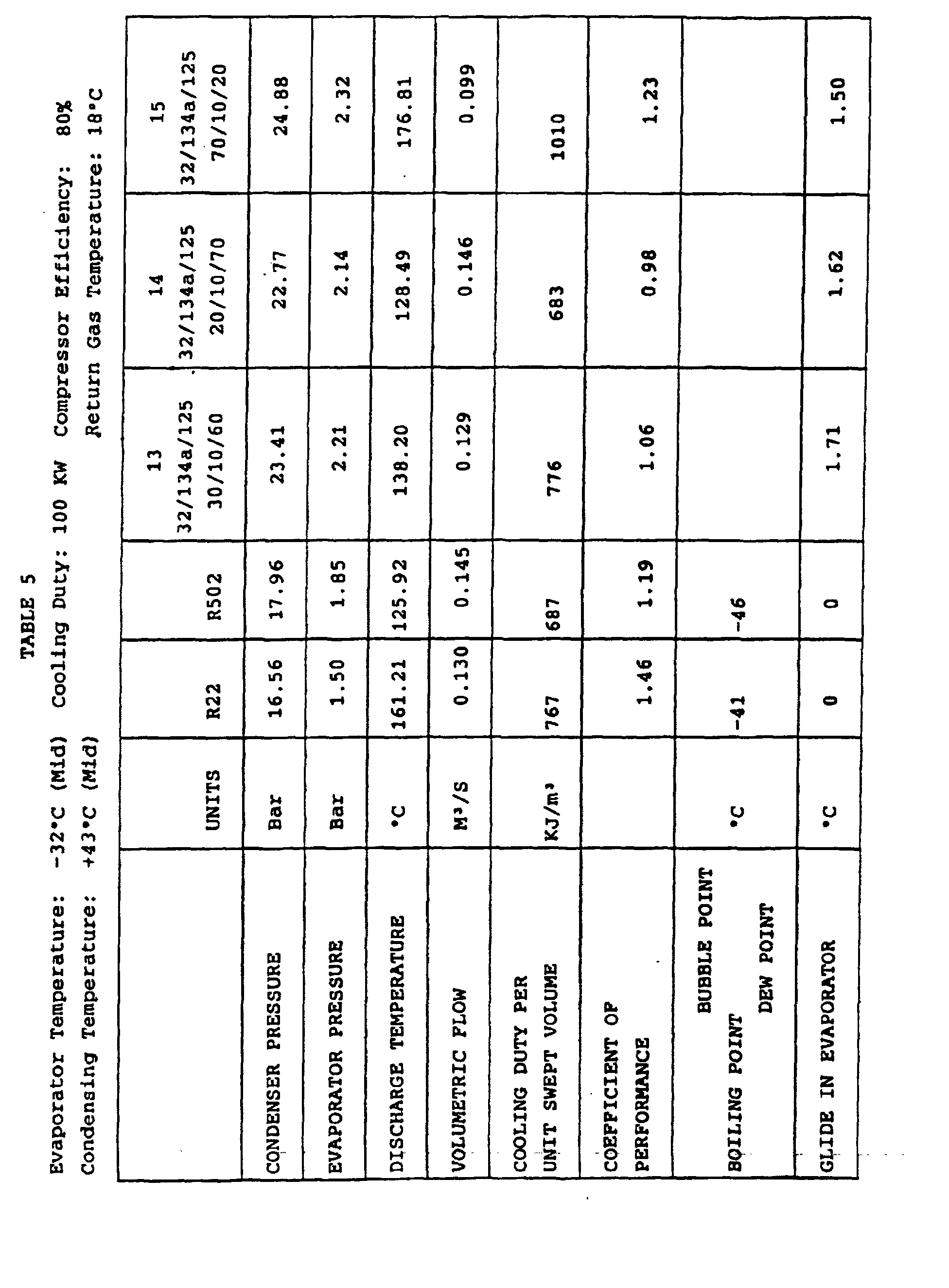

## Claims (Claims for the following Contracting State(s): AT, BE, CH, LI, DE, DK, FR, GB, IT, LU, NL, PT, SE)

1. A refrigerant composition comprising:
(I) a refrigerant comprising a ternary mixture of:
(a) 1,1,1,2-tetrafluoroethane;
(b) difluoromethane; and
(c) pentafluoroethane; and
(II) an ester lubricant,
the refrigerant (I) containing from 5 to 95 weight % of the 1,1,1,2-tetrafluoroethane and from 95 to 5 weight % of the other components.

2. A heat transfer device in which the working fluid comprises a refrigerant composition as claimed in claim 1.

## Claims (Claims for the following Contracting State(s): ES, GR)

1. A process for producing heating or cooling comprising using a refrigerant composition comprising:
(I) a refrigerant comprising a ternary mixture of:
(a) 1,1,1,2-tetrafluoroethane;
(b) difluoromethane; and
(c) pentafluoroethane; and
(II) an ester lubricant,
the refrigerant (I) containing from 5 to 95 weight % of the 1,1,1,2-tetrafluoroethane and from 95 to 5 weight % of the other components.

2. A heat transfer device in which the working fluid comprises a refrigerant composition comprising:
(I) a refrigerant comprising a ternary mixture of:
(a) 1,1,1,2-tetrafluoroethane;
(b) difluoromethane; and
(c) pentafluoroethane; and
(II) an ester lubricant,
the refrigerant (I) containing from 5 to 95 weight % of the 1,1,1,2-tetrafluoroethane and from 95 to 5 weight % of the other components.

## Patentansprüche (Patentansprüche für folgende(n) Vertragsstaat(en): AT, BE, CH, LI, DE, DK, FR, GB, IT, LU, NL, PT, SE)

1. Kühlmittel-Zusammensetzung, enthaltend:
(I) ein Kühlmittel, das ein ternäres Gemisch aus:
(a) 1,1,1,2-Tetrafluorethan,
(b) Difluormethan, und
(c) Pentafluorethan enthält, und
(II) ein Ester-Schmiermittel, wobei das Kühlmittel (I) von 5 bis 95 Gew.-% des 1,1,1,2-Tetrafluorethans und von 95 bis 5 Gew.-% der anderen Komponenten enthält.

2. Wärmeübertragungsvorrichtung, in welcher das Arbeitsfluid eine Kühlmittel-Zusammensetzung nach Anspruch 1 enthält.

## Patentansprüche (Patentansprüche für folgende(n) Vertragsstaat(en): GR, ES)

1. Verfahren zum Heizen oder Kühlen, bei dem eine Kühlmittel-Zusammensetzung verwendet wird, die enthält:
(I) ein Kühlmittel, das ein ternäres Gemisch aus:
(a) 1,1,1,2-Tetrafluorethan,
(b) Difluormethan, und
(c) Pentafluorethan enthält, und
(II) ein Ester-Schmiermittel, wobei das Kühlmittel (I) von 5 bis 95 Gew.-% des 1,1,1,2-Tetrafluorethans und von 95 bis 5 Gew.-% der anderen Komponenten enthält.

2. Wärmeübertragungsvorrichtung, in welcher das Arbeitsfluid eine Kühlmittel-Zusammensetzung enthält, die aufweist:
(I) ein Kühlmittel, das
(a) 1,1,1,2-Tetrafluorethan,
(b) Difluormethan, und
(c) Pentafluorethan enthält, und
(II) ein Ester-Schmiermittel, wobei das Kühlmittel (I) von 5 bis 95 Gew.-% des 1,1,1,2-Tetrafluorethans. und von 95 bis 5 Gew.-% der anderen Komponenten enthält.

## Revendications (Revendications pour l'(les) Etat(s) contractant(s) suivant(s): AT, BE, CH, LI, DE, DK, FR, GB, IT, LU, NL, PT, SE)

1. Composition réfrigérante comprenant :
(I) un réfrigérant comprenant un mélange ternaire de:
(a) 1,1,1,2-tétrafluoroéthane ;
(b) difluorométhane ; et
(c) pentafluoroéthane ; et
(II) un lubrifiant consistant en ester,
le réfrigérant (I) contenant 5 à 95 % en poids du 1,1,1-tétrafluoréthane et 95 à 5 % en poids de l'autre composé.

2. Dispositif de transfert de chaleur dans lequel le fluide de travail comprend une composition réfrigérante suivant la revendication 1.

## Revendications (Revendications pour l'(les) Etat(s) contractant(s) suivant(s): ES, GR)

1. Procédé pour effectuer un chauffage ou refroidissement, comprenant l'utilisation d'une composition de réfrigérant comprenant :
(I) un réfrigérant comprenant un mélange ternaire de:
(a) 1,1,1,2-tétrafluoroéthane ;
(b) difluorométhane ; et
(c) pentafluoroéthane ; et
(II) un lubrifiant consistant en ester,
le réfrigérant (I) contenant 5 à 95 % en poids du 1,1,1,2-tétrafluoréthane et 95 à 5 % en poids des autres constituants.

2. Dispositif de transfert de chaleur, dans lequel le fluide de travail comprend une composition de réfrigérant comprenant :
(I) un réfrigérant comprenant un mélange ternaire de:
(a) 1,1,1,2-tétrafluoroéthane ;
(b) difluorométhane ; et
(c) pentafluoroéthane ; et
(II) un lubrifiant consistant en ester,
le réfrigérant (I) contenant 5 à 95 % en poids du 1,1,1,2-tétrafluoréthane et 95 à 5 % en poids des autres constituants.
